# FASCICULE DE BREVET EUROPEEN

(11) **EP 4 274 972 B1**
(45) Date de publication et mention de la délivrance du brevet: **16.04.2025**
(21) Numéro de dépôt: 22700231.8
(22) Date de dépôt: 07.01.2022
(51) Int. Cl.: F16C 7/02, B29C 45/14

(54) **BIELLE DE LIAISON ENTRE DES ORGANES D'UN VEHICULE AUTOMOBILE, ET PROCÉDÉ DE FABRICATION ASSOCIÉ**
STANGE ZUM VERBINDEN VON ELEMENTEN EINES KRAFTFAHRZEUGS UND ZUGEHÖRIGES HERSTELLUNGSVERFAHREN
ROD FOR CONNECTING MEMBERS OF A MOTOR VEHICLE, AND ASSOCIATED MANUFACTURING METHOD

(30) Priorité: 11.01.2021 FR 2100194
(43) Date de publication de la demande: 15.11.2023
(73) Titulaire: ContiTech Vibration Control GmbH, 30175 Hannover (DE)
(72) Inventeur: OGER, Sébastien, 31100 TOULOUSE (FR); KERGUELEN, Franck, 31100 TOULOUSE (FR)
(74) Mandataire: Kaabouni, Fatima
(86) Numéro de dépôt international: PCT/EP2022/050232
(87) Numéro de publication internationale: WO 2022/148826

(56) Documents cités:
- DE-A1- 3 204 093
- FR-A1- 2 529 973
- US-A- 4 425 820
- US-A1- 2007 264 470
- US-A1- 2015 292 550

## Description

### Domaine de l'invention

La présente invention se rapporte au domaine de la mécanique, et plus précisément à celui des composants intervenant dans la structure d'un véhicule automobile.

### Domaine technique de l'invention

Dans un véhicule automobile, certains organes doivent pouvoir se mouvoir relativement les uns aux autres, selon des trajectoires prédéterminées, tout en demeurant fermement reliés les uns aux autres.

A cette fin, des bielles sont prévues : les extrémités de ces bielles sont montées rotatives sur chacun des organes susceptibles de se mouvoir l'un par rapport à l'autre selon une trajectoire prédéfinie.

Un exemple d'une telle bielle est une bielle de reprise de couple du moteur d'un véhicule automobile, interposée entre ce moteur et le châssis du véhicule.

Un autre exemple d'une telle bielle est une bielle de liaison entre le berceau et un support de roue d'un véhicule automobile.

### Etat de la technique

Dans certaines applications, il est souhaitable de pouvoir utiliser une bielle comportant à l'un de ses extrémités un œillet de liaison, et à son autre extrémité, un étrier de liaison (voir par exemple FR 2529973 A1, US 2015/292550 A1, US 4425820 A et DE 3204093 A1).

C'est le cas par exemple pour une bielle de liaison berceau/support de roue, dont l'œillet coopère avec le berceau, et l'étrier avec le support de roue.

Classiquement, ces bielles de la technique antérieure sont formées en métal ou en alliage métallique, par exemple en aluminium extrudé, ou en acier moulé.

L'inconvénient principal associé à ces matériaux est leur poids : ils n'offrent ainsi pas de réponse satisfaisante lorsque le constructeur de véhicules automobiles impose de fortes contraintes notamment sur le poids des éléments constitutifs de la structure du véhicule.

On trouve aussi dans la technique antérieure des bielles en matériaux thermoplastiques, du type à œillets aux deux extrémités, plus légères mais moins résistantes mécaniquement.

### Problème technique restant posé

La présente invention a ainsi notamment pour objectif de fournir une bielle pour structure de véhicule automobile, du type à œillet et à étrier de liaison, plus légère que celle de la technique antérieure, et présentant une résistance mécanique au moins égale.

### Exposé de l'invention

On atteint ce but de l'invention avec une bielle comportant, à chacune de ses deux extrémités, une partie de liaison destinée à coopérer avec un organe extérieur, l'une de ces parties de liaison comprenant un étrier et l'autre de ces parties de liaison comprenant un œillet, ledit étrier étant relié audit œillet par une bande de renfort continue formant boucle, ledit œillet, ledit étrier et ladite bande étant surmoulés au moins partiellement par une matière thermoplastique.

Avec ces caractéristiques, on obtient une bielle qui est non seulement résistante, grâce à la présence de la bande de renfort continue, mais également légère, grâce à l'utilisation d'une matière thermoplastique, qui vient se substituer au métal ou à l'alliage métallique de la technique antérieure.

Suivant d'autres caractéristiques optionnelles de la bielle selon invention, prises seules ou en combinaison :
- ledit étrier est formé en métal ou en alliage métallique, par emboutissage, ou par moulage, ou par extrusion, et/ou par usinage et/ou par soudage de plusieurs éléments métalliques entre eux : l'utilisation de métal ou d'alliage métallique permet d'assurer par boulonnage la bonne tenue dans le temps de cette extrémité de la bielle qui est destinée à coopérer avec un organe du véhicule automobile, tel qu'un organe de support de roue ;
- ledit étrier présente, dans la zone de coopération avec ladite bande de renfort, une section en oméga : une telle section permet de garantir une répartition optimale des contraintes dans l'étrier et dans les autres parties de la bielle ; plus précisément, cette section en oméga permet d'obtenir un moment quadratique élevé de la section tout en étant emboutissable avec des rayons de cambrage/cintrage faibles ;
- ledit étrier présente des zones de faiblesse, adaptées pour céder avant les autres parties de la bielle, en cas d'efforts dépassant un seuil prédéterminé : on peut de la sorte prévoir que la bielle soit déformée dans la partie de l'étrier, et non pas ailleurs, en cas de collision du véhicule automobile avec un obstacle extérieur, ce qui permet de maîtriser le mode de ruine de cette bielle en situation extrême ;
- ledit œillet comporte un élément élastique au centre duquel est inséré un élément métallique de forme sensiblement tubulaire : cet élément élastique, qui peut être par exemple - mais non nécessairement - annulaire, permet de filtrer les vibrations transmises par la bielle, et l'insert métallique permet de relier par boulonnage cet élément élastique à la structure du véhicule automobile sans risque d'usure de cet élément ;
- ladite bande de renfort comprend des fibres longues et continues telles que des fibres de verre ou de carbone, ou des fibres végétales telles que des fibres de lin ou d'orties par exemple, noyées dans une résine : une telle bande de renfort, réalisée par exemple - mais de manière non limitative - avec une résine polyamide, présente l'avantage d'être très résistante aux efforts de traction, tout en étant suffisamment souple pour pouvoir être mise en œuvre aisément entre l'étrier et l'œillet lors du processus de fabrication de la bielle ;
- ledit surmoulage thermoplastique est réalisé dans une résine identique ou chimiquement compatible avec celle de la résine enrobant les fibres de ladite bande de renfort : un tel surmoulage peut être réalisé aisément avec des outils d'injection classique, à faible coût ; il permet en outre de protéger la bande de renfort vis-à-vis des projections de graviers et autres particules lors de déplacement du véhicule automobile ; comme il est réalisé dans la même résine, ou dans une résine chimiquement compatible avec celle enrobant la bande de renfort, on obtient une excellente cohésion de ce surmoulage avec la bande de renfort ;
- ledit surmoulage présente des cavités et des nervures : ces nervures et ces cavités, placées sur les principaux chemins d'effort, permettent de faire une économie de matière surmoulée, et donc de réduire le poids et le coût de fabrication de la bielle ; de plus, des nervures disposées entre la bande de renfort et la périphérie de la bielle permettent de positionner cette bande de renfort à l'écart des agressions mécaniques extérieures, comme des chocs de graviers ou autres particules lors du déplacement du véhicule.

La présente invention se rapporte également à un procédé de fabrication d'une bielle conforme à ce qui précède, dans lequel on passe ladite bande de renfort à l'intérieur dudit étrier et autour dudit œillet, on place ces trois pièces ainsi reliées à l'intérieur d'un moule à injection, et on injecte une matière de surmoulage à l'intérieur de ce moule.

Ce faisant, la matière de surmoulage vient enrober au moins une partie de l'étrier, l'œillet et la bande de renfort, permettant de solidariser ces pièces entre elles.

Lorsque l'œillet comporte un élément élastique annulaire, la pression exercée par la matière de surmoulage lors de son injection à l'intérieur du moule, permet de comprimer cet élément élastique annulaire vers son centre : ceci permet d'augmenter la durée de vie de cet élément élastique.

### Brève description des dessins

D'autres caractéristiques et avantages de l'invention ressortiront à la lecture de la description qui suit, en référence aux figures annexées, dans lesquelles :
[Fig.1] : est une vue en perspective d'un étrier, d'un œillet et d'une bande de renfort d'une bielle selon invention, avant leur assemblage et leur surmoulage ;
[Fig.2] : est une vue en perspective de cet étrier, de cet œillet et de cette bande après leur assemblage et avant leur surmoulage ;
[Fig.3] : est une vue en perspective de la bielle selon invention après surmoulage de l'étrier, de l'œillet et de la bande de renfort ;
[Fig.4] : est une vue de dessus de cette bielle ;
[Fig.5] : est une vue en coupe de cette bielle selon la ligne A-A de la [Fig.4] ;
[Fig.6] : est une vue en coupe de cette bielle selon la ligne B-B de la [Fig.5] ;
[Fig.7] : est une vue analogue à celle de la [Fig.2], avec une variante d'étrier ;
[Fig.8] : est une vue analogue à celle de la [Fig.2], avec encore une autre variante d'étrier.
[Fig.9] : est une vue de la bielle des figures 1 à 6, dont l'étrier présente une zone de faiblesse programmée,
[Fig.10] : est une vue de cette bielle après rupture de l'étrier, et
[Fig.11] : est une vue en perspective analogue à celle des figures 2, 7 et 8, avec encore une autre variante d'étrier.

Pour plus de clarté, les éléments identiques ou similaires sont repérés par des signes de référence identiques ou similaires sur l'ensemble des figures.

### Description détaillée de modes de réalisation de l'invention

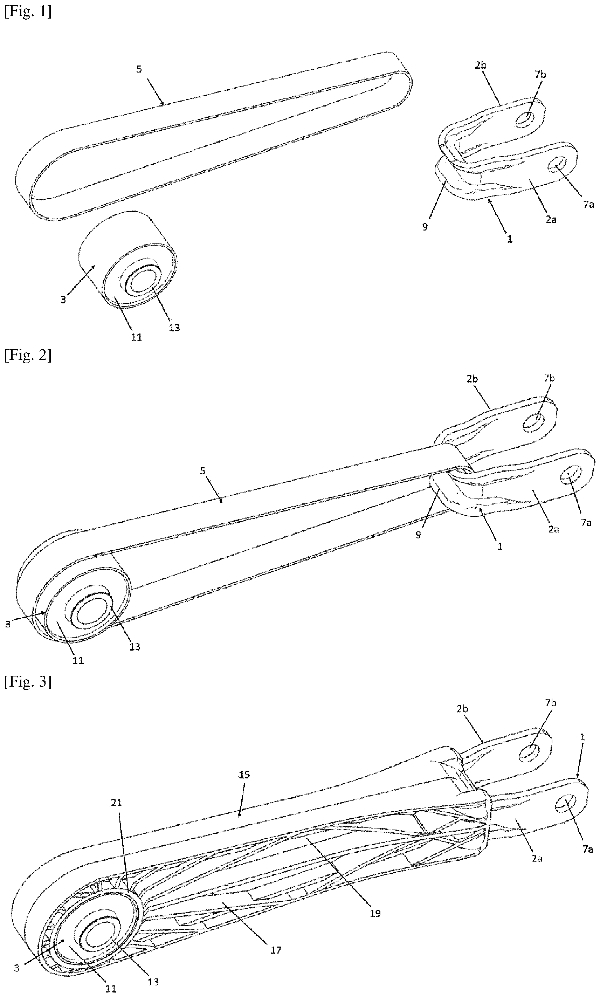

On se reporte à présent à la [Fig.1], sur laquelle on a représenté trois pièces entrant dans la constitution d'une bielle selon la présente invention.

Ces trois pièces comprennent un étrier 1, un œillet 3, et une bande de renfort 5.

L'étrier 1 peut être réalisé par emboutissage, par moulage, par extrusion, par assemblage de pièces mécano-soudées, en acier en tout autre alliage métallique répondant au cahier des charges imposé par le constructeur.

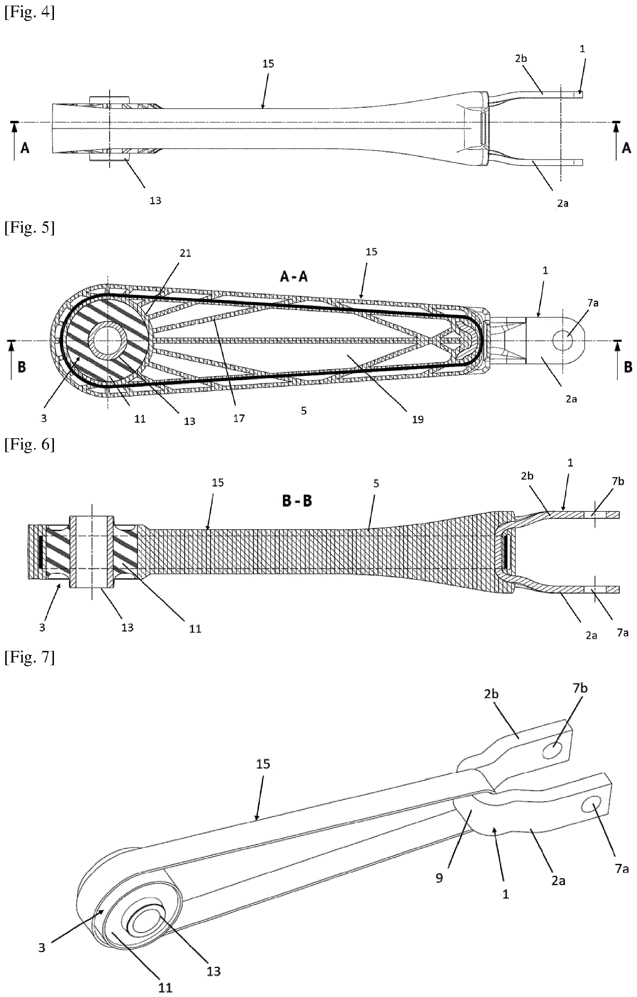

L'étrier 1 comporte dans chacune de ses branches latérales 2a, 2b un orifice 7a, 7b. La partie centrale 9 de cet étrier reliant entre elles les deux branches latérales 2a, 2b présente une section en oméga, comme cela est visible par exemple sur la [Fig.5].

L'œillet 3 comprend un élément de préférence - mais de manière non limitative - annulaire 11 formé dans un matériau élastique tel que du caoutchouc naturel ou synthétique, surmoulé avec adhérisation sur un élément sensiblement tubulaire 13, formé de préférence en métal.

La bande de renfort 5, dont la largeur peut par exemple - mais de manière non limitative - être de l'ordre de 20 mm, et l'épaisseur de l'ordre de 1 mm, est formée en résine, telle que de la résine polyamide emprisonnant des fibres de renfort longues et continues, telles que des fibres de verre ou de carbone, ou des fibres végétales telles que fibres de lin ou d'orties par exemple, ces fibres étant disposées sensiblement selon la direction de la longueur de cette bande 5.

La résine polyamide est indiquée à titre d'exemple, mais il va de soi que d'autres résines utilisées dans le domaine des composites peuvent aussi convenir.

Cette bande de renfort 5 forme une boucle continue, c'est-à-dire qu'elle ne comporte pas d'interruption.

Comme on peut le voir sur la [Fig.2], cette bande de renfort 5 est destinée à passer autour de l'élément annulaire en caoutchouc 11 de l'œillet 3, et à l'intérieur de l'étrier 1, autour de la partie centrale 9 de cet étrier, c'est-à-dire contre la partie convexe de la section en oméga de cette partie centrale 9.

Cette coopération particulière de la bande de renfort 5 avec l'étrier 1 et l'œillet 3 est également visible sur la [Fig.5].

Sur les figures 3, 4, 5, 6, on peut voir la bielle selon invention après l'opération de surmoulage par une matière thermoplastique identique ou chimiquement compatible avec la résine de la bande de renfort 5, telle que de la résine polyamide.

Comme cela visible sur ces figures, cette matière thermoplastique 15 enrobe la partie centrale 9 de l'étrier 1, l'œillet 3, et la bande de renfort 5.

Comme cela est plus particulièrement visible sur les figures 3 et 5, cette matière thermoplastique ainsi surmoulée comporte des nervures 17 et des cavités 19, judicieusement placées par rapport aux chemins de contraintes tels qu'ils résultent des calculs de conception.

Certaines de ces nervures maintiennent un espace entre la bande de renfort 5 et la périphérie de la bielle, de manière à protéger cette bande de renfort des agressions extérieures.

On notera en particulier qu'une nervure circulaire 21 entoure l'élément annulaire en caoutchouc 11, et que de la matière thermoplastique 15 vient enrober complètement la partie centrale 9 de l'étrier 1 présentant une section en oméga.

De préférence, la résine polyamide permettant d'obtenir le surmoulage 15 est elle-même chargée de fibres de renfort, par exemple en verre ou en carbone, ou des fibres végétales telles que fibres de lin ou d'orties par exemple, disposées de préférence selon la direction de la longueur de la bielle.

Pour obtenir la bielle selon invention, on place l'étrier 1, l'œillet 3 et la bande de renfort 5, mutuellement agencés conformément à la [Fig.2], à l'intérieur d'un moule à injection dont les deux demi-moules comportent des empreintes correspondant au négatif de la matière plastique surmoulée 15 visible aux figures 3 et 5.

Une fois les trois pièces 1, 3 et 5 placées à l'intérieur de ce moule, on injecte la résine polyamide à l'intérieur de ce moule, de sorte que cette résine circule dans toutes les zones en creux définissant les nervures 17, 21.

La pression de l'injection permet notamment d'exercer un effort de compression radiale sur l'élément annulaire en caoutchouc 11, contre l'élément métallique tubulaire 13.

Cet élément 11 ayant au préalable été enduit sur sa périphérie d'une sous-couche spéciale, il devient complétement adhérisé à la nervure circulaire 21.

Le surmoulage ainsi obtenu permet notamment de protéger la bande de renfort 15 des projections de graviers ou autres particules, pouvant survenir lorsque le véhicule se déplace.

Cette bande ainsi surmoulée permet d'obtenir une excellente résistance de la bielle selon l'invention vis-à-vis des efforts de traction et de compression.

L'effort de compression radiale réalisé sur l'élément annulaire élastique 11 lors du surmoulage, permet de maintenir cet élément annulaire sous précontrainte, et ainsi d'éviter une usure prématurée du caoutchouc qui le constitue.

Le profil en oméga de la section centrale 9 de l'étrier 1 permet de réaliser cet étrier par emboutissage sans risque de concentration de contraintes notamment dans les parties de liaison de cette partie centrale avec les branches 2a, 2b de cet étrier.

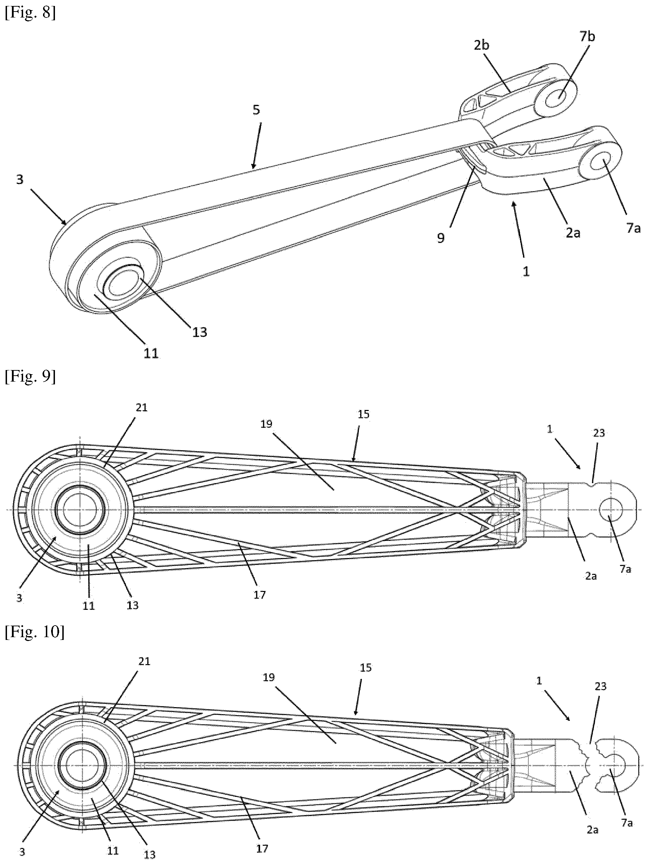

On peut prévoit de préférence certaine zones de faiblesse prédéterminées dans l'étrier 1, de sorte qu'en cas de choc important, la bielle se ruine plutôt dans la zone de l'étrier 1 qu'ailleurs, ce qui permet de contrôler le comportement de cette bielle en situation d'accident : une telle zone de faiblesse 23 est représentée à titre d'exemple sur les figures 9 et 10, respectivement avant et après rupture de l'étrier.

Les deux orifices 7a, 7b formés dans les branches 2a, 2b de l'étrier 1 sont typiquement destinés à coopérer avec un œillet de support de roue de véhicule automobile.

L'élément tubulaire 13 de l'œillet 3 est typiquement destiné à coopérer avec un téton ou plus généralement avec une prise en chape solidaire d'un berceau d'essieu de véhicule automobile.

Sur les figures 7 et 8, analogues à la [Fig.2], on a représenté deux variantes d'étrier : sur la [Fig.7], l'étrier 1 est réalisé en aluminium extrudé, et sur la [Fig.8], l'étrier 1 est nervuré et réalisé en acier moulé.

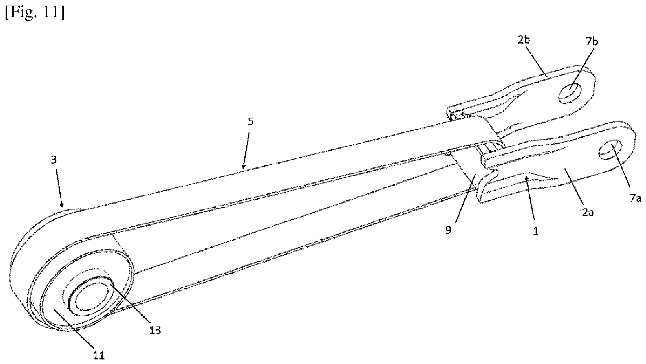

Sur la [Fig.11], on a représenté une variante dans laquelle l'étrier 1 est formé par assemblage mécano-soudé de plusieurs pièces métalliques.

Comme on peut le comprendre à la lumière de ce qui précède, la bielle selon invention et son procédé de fabrication associé, permettent d'obtenir une bielle résistante en matériaux très légers.

Une telle bielle peut être utilisée pour les articulations des roues d'un véhicule automobile, mais également, moyennant les adaptations géométriques qui s'imposent, par exemple comme bras de reprise de couple, interposé entre le moteur d'un véhicule automobile et son châssis.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Bielle comportant, à chacune de ses deux extrémités, une partie de liaison destinée à coopérer avec un organe extérieur, l'une de ces parties de liaison comprenant un étrier (1) et l'autre de ces parties de liaison comprenant un œillet (3), ledit étrier (1) étant relié audit œillet (3) par une bande de renfort continue (5) formant boucle,
la bielle étant **caractérisée en ce que** ladite bande (5) passe à l'intérieur dudit étrier (1) et autour dudit œillet (3), ledit étrier (1), ledit œillet (3) et ladite bande (5) étant surmoulés au moins partiellement par une matière thermoplastique (15).

2. Bielle selon la revendication 1, dans laquelle ledit étrier (1) est formé en métal ou en alliage métallique, par emboutissage, ou par moulage, ou par extrusion, et/ou par usinage et/ou par soudage de plusieurs éléments métalliques entre eux.

3. Bielle selon l'une des revendications 1 ou 2, dans laquelle ledit étrier (1) présente, dans la zone (9) de coopération avec ladite bande de renfort (5), une section en oméga.

4. Bielle selon l'une quelconque des revendications 1 à 3, dans laquelle ledit étrier (1) présente des zones de faiblesse, adaptées pour céder avant les autres parties de la bielle, en cas d'efforts dépassant un seuil prédéterminé.

5. Bielle selon l'une quelconque des revendications précédentes, dans laquelle ledit œillet (3) comporte un élément élastique (11) au centre duquel est inséré un élément métallique (13) de forme sensiblement tubulaire.

6. Bielle selon l'une quelconque des revendications précédentes, dans laquelle ladite bande de renfort (5) comprend des fibres longues et continues telles que des fibres de verre ou de carbone, ou des fibres végétales telles que fibres de lin ou d'orties, noyées dans une résine.

7. Bielle selon l'une quelconque des revendications précédentes, dans laquelle ledit surmoulage thermoplastique (15) est réalisé dans une résine identique ou chimiquement compatible avec celle de la résine enrobant les fibres de ladite bande de renfort.

8. Bielle selon l'une quelconque des revendications précédentes, dans laquelle ledit surmoulage (15) présente des cavités (19) et des nervures (17).

9. Procédé de fabrication d'une bielle conforme à l'une quelconque des revendications précédentes, dans lequel on passe ladite bande de renfort (5) à l'intérieur dudit étrier (1) et autour dudit œillet (3), on place ces trois pièces ainsi reliées à l'intérieur d'un moule à injection, et on injecte une matière de surmoulage (15) à l'intérieur de ce moule.

## Patentansprüche

1. Stange, welche an jedem ihrer zwei Enden einen Verbindungsteil aufweist, der dazu bestimmt ist, mit einem äußeren Organ zusammenzuwirken, wobei einer dieser Verbindungsteile einen Bügel (1) umfasst und der andere dieser Verbindungsteile eine Öse (3) umfasst, wobei der Bügel (1) mit der Öse (3) durch ein endloses Verstärkungsband (5) verbunden ist, das eine Schleife bildet, wobei die Stange **dadurch gekennzeichnet ist, dass** das Band (5) durch das Innere des Bügels (1) und um die Öse (3) herum verläuft, wobei der Bügel (1), die Öse (3) und das Band (5) wenigstens teilweise mit einem thermoplastischen Material (15) umspritzt sind.

2. Stange nach Anspruch 1, wobei der Bügel (1) aus Metall oder aus Metalllegierung durch Tiefziehen oder durch Formen oder durch Extrudieren ausgebildet ist, und/oder durch spanabhebende Formgebung und/oder durch Verschweißen mehrerer metallischer Elemente miteinander.

3. Stange nach Anspruch 1 oder 2, wobei der Bügel (1) im Bereich (9) des Zusammenwirkens mit dem Verstärkungsband (5) einen omegaförmigen Querschnitt aufweist.

4. Stange nach einem der Ansprüche 1 bis 3, wobei der Bügel (1) Schwächungsbereiche aufweist, die dafür ausgelegt sind, im Falle von Kräften, die einen vorbestimmten Schwellenwert überschreiten, vor den anderen Teilen der Stange nachzugeben.

5. Stange nach einem der vorhergehenden Ansprüche, wobei die Öse (3) ein elastisches Element (11) aufweist, in dessen Mitte ein im Wesentlichen rohrförmiges metallisches Element (13) eingesetzt ist.

6. Stange nach einem der vorhergehenden Ansprüche, wobei das Verstärkungsband (5) lange und endlose Fasern wie Glas- oder Kohlefasern umfasst, oder Pflanzenfasern wie Flachs- oder Brennnesselfasern, die in ein Harz eingebettet sind.

7. Stange nach einem der vorhergehenden Ansprüche, wobei die thermoplastische Umspritzung (15) mit einem Harz ausgeführt ist, das identisch oder chemisch kompatibel mit dem Harz ist, das die Fasern des Verstärkungsbandes umhüllt.

8. Stange nach einem der vorhergehenden Ansprüche, wobei die Umspritzung (15) Hohlräume (19) und Rippen (17) aufweist.

9. Verfahren zur Herstellung einer Stange gemäß einem der vorhergehenden Ansprüche, wobei das Verstärkungsband (5) durch das Innere des Bügels (1) und um die Öse (3) geführt wird, diese drei so verbundenen Teile im Inneren einer Spritzform angeordnet werden und ein Umspritzmaterial (15) ins Innere dieser Form eingespritzt wird.

## Claims

1. Connecting rod comprising, at each of its two ends, a connecting part intended to cooperate with an external member, one of these connecting parts comprising a yoke (1) and the other of these connecting parts comprising an eyelet (3), said yoke (1) being connected to said eyelet (3) by a continuous reinforcing strip (5) forming a loop, the connecting rod being **characterized in that** said strip (5) is passed inside said yoke (1) and around said eyelet (3), said yoke (1), said eyelet (3) and said strip (5) being overmoulded at least partially by a thermoplastic material (15).

2. Connecting rod according to Claim 1, wherein said yoke (1) is formed from metal or from metal alloy, by stamping, or by casting, or by extrusion, and/or by machining and/or by welding a plurality of metal elements together.

3. Connecting rod according to one of Claims 1 or 2, wherein said yoke (1) has an omega cross section in the zone (9) of cooperation with said reinforcing strip (5).

4. Connecting rod according to any one of Claims 1 to 3, wherein said yoke (1) has zones of weakness, adapted to yield before the other parts of the connecting rod, in the event of forces exceeding a predetermined threshold.

5. Connecting rod according to any one of the preceding claims, wherein said eyelet (3) comprises an elastic element (11) in the centre of which is inserted a metal element (13) of substantially tubular shape.

6. Connecting rod according to any one of the preceding claims, wherein said reinforcing strip (5) comprises long and continuous fibres such as glass or carbon fibres, or plant fibres such as flax or nettle fibres, embedded in a resin.

7. Connecting rod according to any one of the preceding claims, wherein said thermoplastic overmoulding (15) is produced from a resin identical to or chemically compatible with that of the resin coating the fibres of said reinforcing strip.

8. Connecting rod according to any one of the preceding claims, wherein said overmoulding (15) has cavities (19) and ribs (17).

9. Method for manufacturing a connecting rod according to any one of the preceding claims, wherein said reinforcing strip (5) is passed inside said yoke (1) and around said eyelet (3), these three thus connected parts are placed inside an injection mould, and an overmoulding material (15) is injected into this mould.
